# EUROPÄISCHE PATENTSCHRIFT

(11) **EP 1 782 339 B1**
(45) Veröffentlichungstag und Bekanntmachung des Hinweises auf die Patenterteilung: **10.10.2012**
(21) Anmeldenummer: 05783471.5
(22) Anmeldetag: 19.08.2005
(51) Int. Cl.: G06K 17/00, G06K 19/077, B65D 85/00, G01V 15/00

(54) **FUNKETIKETTFÄHIGE UMVERPACKUNG**
EXTERNAL PACKAGE CAPABLE OF BEING RADIO-TAGGED
EMBALLAGE EXTERNE ETIQUETABLE PAR RADIO-EMETTEURS

(30) Priorität: 23.08.2004 DE 102004040831
(43) Veröffentlichungstag der Anmeldung: 09.05.2007
(73) Patentinhaber: PolyIC GmbH & Co. KG, 90763 Fürth (DE)
(72) Erfinder: FICKER, Jürgen, 91052 Erlangen (DE); LORENZ, Markus, 94353 Haibach (DE); CLEMENS, Wolfgang, 90617 Puschendorf (DE); BÖHM, Markus, 91096 Möhrendorf (DE)
(74) Vertreter: Louis Pöhlau Lohrentz
(86) Internationale Anmeldenummer: PCT/DE2005/001468
(87) Internationale Veröffentlichungsnummer: WO 2006/021193

(56) Entgegenhaltungen:
- EP-A- 1 227 434
- EP-A- 1 422 168
- DE-A1- 4 401 089
- DE-A1- 10 150 194
- DE-A1- 10 229 168
- DE-A1- 19 610 284
- US-A- 6 107 920
- US-B1- 6 483 473
- PATENT ABSTRACTS OF JAPAN Bd. 1999, Nr. 13, 30. November 1999 (1999-11-30) -& JP 11 238103 A (DENSO CORP), 31. August 1999 (1999-08-31)

## Beschreibung

Die Erfindung betrifft eine Umverpackung, insbesondere eine, die ein Produkt mit einem Funketikett, wie einem RFID (Radio Frequency Indentification)-Tag, umschließt und/oder in deren Nähe sich ein solches Etikett befindet.

Lebensmittel, Zigaretten, Tabakwaren allgemein, Kaugummi, Schokoladen und vieles mehr werden typischerweise in Folien verpackt, die den Inhalt frisch halten. Die Folien sind oftmals aus Papier oder einem anderen Träger (wie z.B. eine Polymerfolie), auf den eine dünne elektrisch leitende Schicht, in der Regel eine metallische Schicht, typischerweise Aluminium, aufgebracht ist. Die dünne metallische Schicht hat dabei etliche Effekte, unter anderem sieht sie glänzend aus, bildet eine Barriereschicht gegen Sauerstoff und Feuchtigkeit, reflektiert die Wärmestrahlung und hat einen entsprechend isolierenden Charakter.

Nachteilig an dieser Umverpackung mit elektrisch leitender Schicht ist beim Einsatz von RFID-Tags, insbesondere EPC (electronic product code)-Etiketten, EAS (electronic article surveillance)-Tags, wie er momentan in großem Stil geplant ist, dass die elektrisch leitende Schicht der Umverpackung eine elektrisch leitende Fläche erzeugt, die elektromagnetische Wellen in unerwünschter Weise abschirmt, ähnlich wie in einem so genannten Faraday - Käfig, oder reflektiert und damit einen Einsatz von Funketiketten und/oder sonstigen elektrischen Bauteilen am Produkt und/oder an der Umverpackung erschwert oder gar unmöglich macht.

Aus der US 6,483,473 B1 ist ein Gerät zur drahtlosen Kommunikation bekannt, wobei eine Polantenne und eine Slotantenne für die verschiedenen Übertragungsmodi eingesetzt werten.

Aus der DE 44 010 89, das den Oberbegriff des Anspruchs 1 bildet, ist eine Hülle für eine kontaktlose Chipkarte bekannt, die in Teilbereichen metallisiert ist, damit unautorisierter Zugriff auf die enthaltenen Chipdaten verhindert wird.

Aus der DE 101 50 194 ist eine Chipkarte bekannt, die einen Chipkartenkörper mit einer Leiterbahn umfasst, wobei die Leiterbahn zumindest abschnittsweise eine Lagekodierung aufweist.

Aufgabe der vorliegenden Erfindung ist es daher, eine Umverpackung mit einem Träger und einer elektrisch leitenden Schicht zu schaffen, die den Einsatz von Tags in der Umgebung der Umverpackung nicht behindert.

Diese Aufgabe wird durch den Gegenstand der unabhängigen Ansprüche 1 und 15 gelöst.

Gegenstand der Erfindung ist ein Produkt, das ein elektrisches Bauteil mit Spule hat, wobei das elektrische Bauteil mit Spule auf oder in dem Produkt angeordnet ist und das Produkt eine Umverpackung hat, die einen Träger und eine elektrisch leitende Schicht aufweist, wobei der Träger Papier oder eine Polymerfolie umfasst und die elektrisch leitende Schicht eine Struktur hat, die die durch die leitende Schicht der Umverpackung erzeugte Abschirmung des elektrischen Bauteils mit Spule auf oder in dem Produkt so vermindert, dass die Funktionsfähigkeit des elektrischen Bauteils auf oder in dem Produkt erhalten bleibt, wobei das elektrische Bauteil Informationen durch die Umverpackung durch nach außen liefert oder erhält und/oder dessen Energieversorgung durch die Umverpackung hindurch gespeist wird, wobei die Umverpackung um das Produkt mit elektrischem Bauteil so angeordnet ist, dass die Struktur der Umverpackung, deren elektrisch leitende Schicht zumindest über einer Spule des elektrischen Bauteils auf oder in dem Produkt mehrmals unterbricht, so dass die übrig bleibenden leitfähigen Bereiche so gestaltet sind, dass Wirbelströme vermindert werden.

Mit dem Begriff "in der Umgebung" ist in der vorliegenden Offenbarung folgendes umfasst:
Zum einen ein Tag der direkt am Produkt und/oder innerhalb der Umverpackung angeordnet ist.
Zum anderen ein Tag der sich in der Nähe der Umverpackung befindet.

Wegen der Abschirmung durch die Umverpackung treten Störungen in der Regel bei herkömmlichen Tags innerhalb und/oder direkt an den Umverpackungen auf und auch bei Tags, die sich außerhalb der Umverpackung, aber in deren Nähe befinden, z.B. durch Reflexionen der elektromagnetischen Wellen am Metall. Der Begriff "in der Umgebung" oder "nahe gelegen" bedeutet hierbei "im Bereich der typischen Lesereichweite der Tags", beispielsweise bei 13.56 MHz ist dies typischerweise bis ca. 70 cm, bei UHF (ultra hoch frequenz - 850 - 950 MHz) kann dies bis etwa 2 m betragen, im GHz-Bereich sogar noch mehr (mehrere Meter).

Mit dem Begriff "dass die Funktionsfähigkeit des Bauteils noch gegeben ist" ist die noch tolerierbare Abschirmung gemeint und kann kein konkreter Wert angegeben werden, da dies von vielen Fakten wie Sendeleistung, Sendefrequenz und/oder der Art des Bauteils wie beispielsweise Art des Funketiketts abhängig ist. Eine nicht mehr tolerierbare Abschirmung ist beispielsweise eine Reduzierung des Leseabstandes um die Hälfte (z.B. von 70 cm auf 35 cm) und/oder ist dann gegeben, wenn etwaige Informationen bis unterhalb der Rauschgrenze abgeschirmt und/oder die Energieversorgung eines Radiofrequenz-Tags bis unter die Mindest - Betriebsspannung reduziert wird.

Eine, die Abschirmung vermindernde, Beschichtung der leitfähigen Schicht der Umverpackung kann alternativ zu der Struktur und/oder ergänzend dazu eingesetzt werden und ist bevorzugt elektrisch hochohmig (z.B. > 10^5 Ohm m)oder isolierend.

Beispielsweise kann man den optisch metallischen Effekt schon durch sehr dünne Metallschichten erreichen (mit einigen 10 nm, die elektrisch sehr schlecht leitend sind, wegen der geringen Schichtdicke und/oder weil sie sehr stark unterbrochen sind durch deren Herstellungsprozess, z.B. Aufdampfen, Aufsputtern), die dann mit verschiedenen Lackschichten an die weiteren Bedürfnisse der Umverpackung angepasst werden können.

Ebenso gut kann ein Bild auf die Umverpackung eventuell auch über die Struktur, aufgebracht werden.

Die Struktur in der leitfähigen Schicht ändert die Abschirm- und/oder Reflexionswirkung derart, dass induzierte, abschirmende und/oder reflektierende Ströme in der leitfähigen Schicht (z.B. durch Wirbelströme) vermindert oder gar verhindert werden. Im Resultat durchdringt die elektromagnetische Strahlung dann die Umverpackung und/oder Kopplung, insbesondere induktive, kapazitive, Nah- oder Fernfeld - Kopplung, kann stattfinden. In der Umgebung der Umverpackung kann dann auch im Bereich der Sendeleistungen von RFID-Tags elektrische Leistung und/oder Information übertragen werden.

Die Sendeleistungen sind in der Regel durch Gesetze festgelegt. Eine Übersicht, der für RFID Anwendungen einsetzbaren Sendeleistungen ist beispielsweise gegeben in (Klaus Finkenzeller, "RFID-Handbuch", 2. Auflage, Hauser Verlag München, 2000, ISBN 3-446-21278-7). Demnach beträgt in Deutschland der Grenzwert für die Trägerleistung für 13,56 MHz Anwendungen 68,5 dBµA bei 3 m Abstand und 13,5 dBµA bei 30m Abstand vom Sender, dabei wird das magnetische H-Feld der Funkanlage gemessen. Die Leistungsgrenzen variieren für verschiedene Frequenzen sowie für verschiedene Länder.

Die Struktur unterbricht die elektrisch leitende Fläche der elektrisch leitenden Schicht ein oder mehrmals, wobei die Unterbrechung bevorzugt zumindest die Fläche über beispielsweise einer Spule des elektrischen Bauteils z.B. in zwei Hälften teilt. Am wirkungsvollsten stört die Struktur die Abschirmung, wenn sie gegenüber und in der Mitte einer Spule des elektrischen Bauteils angeordnet ist.

Die Struktur ist beispielsweise ein einfacher Einschnitt der die leitende Fläche der elektrisch leitenden Schicht ganz oder teilweise durchzieht. Die Form der Einschnitte ist irrelevant, es kommt nur auf die Größe und Form der übrig bleibenden leitfähigen Bereiche an, die so gestaltet sein müssen, dass Wirbelströme vermindert werden.

Die Struktur teilt die leitende Fläche der elektrisch leitenden Schicht in mehrere kleinere leitende Flächen. Die Struktur kann die leitende Fläche der elektrisch leitenden Schicht aber auch in viele kleine leitende Flächen teilen. Die Struktur umfasst beispielsweise zumindest zwei parallele und/oder zumindest zwei im Winkel zueinander stehende Einschnitte. Dabei kommt es nicht auf die Form der Einschnitte, sondern auf die Größe und Form der übrig bleibenden leitfähigen Fläche an (beispielsweise wirkt bei gleicher Fläche ein offener Kreis kaum, ein geschlossener Kreis jedoch sehr stark abschirmend) wobei für eine gegebene Frequenz eine kleinere Fläche wenig, eine größere jedoch stärker abschirmend ist.

Die Umverpackung kann hergestellt werden, indem man auf einen Träger, beispielsweise Papier oder Folie, eine elektrisch leitfähige Schicht aufbringt, die dann in einem nachfolgenden Arbeitsschritt strukturiert wird. Die Struktur erfolgt bevorzugt durch einfache Mittel und/oder minimale Eingriffe.

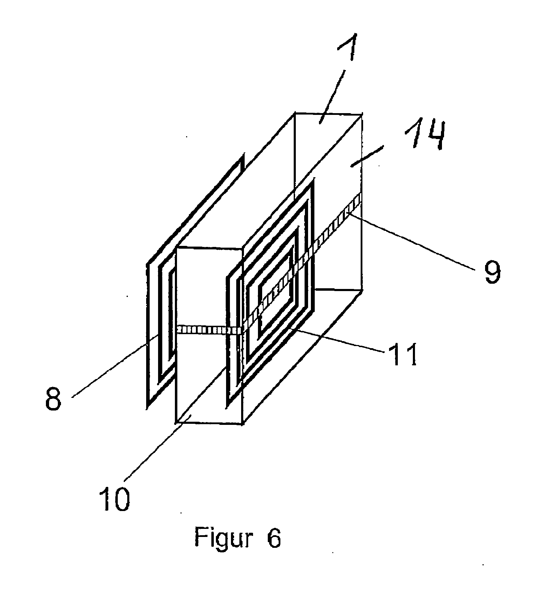

Besonders vorteilhaft ist z.B. das sogenannte Dry Phase Patterning (siehe z.B. Veröffentlichung von Pira International Copyr. 2002, "RFID in Packaging" Dr. Peter Harrop, "Pira on printing", ISBN 1858029457; PAELLA Project ACREO, dry phase patterning method; Antenna for EAS RFID p.49 fig.6.2), da hier keine nasschemischen Verfahren verwendet werden. Vorteilhafterweise wird die leitende Schicht der Umverpackung durch ein Trockenstrukturierverfahren, beispielsweise mit einem strukturierten Kratzverfahren, (das auch Rolle-zu-Rolle tauglich ist) in hohen Volumina und/oder preiswert strukturiert.

Aber natürlich sind auch alle anderen strukturierenden direkten oder indirekten, additiven oder subtraktiven Verfahren einsetzbar, je nach Art der Umverpackung (z.B. strukturiertes Aufdampfen, Bedrucken mit einem Schutzlack und anschließendem nass- oder trocken Ätzverfahren).

Bei Metallen kann die Struktur nasschemisch durch Ätzprozesse durchgeführt werden, durch trockene Prozessschritte wie Trockenätzen, Schnitt- und/oder Stanzprozesse und/oder durch Trockenstrukturierung mittels Einprägung, wobei die geprägten Stellen durch ein Messer entfernt werden und/oder mit anderem Material befüllt werden können.

Umgekehrt kann man aber auch eine bereits strukturierte elektrisch leitende Schicht auf den Träger aufbringen, wie dies beispielsweise durch Drucken, (z.B. leitfähige Pasten, Leitsilber, organisch basierte Materialien) oder Kleben/Laminieren (z.B. Aluminium, Kupfer, Silber) möglich ist. Die elektrisch leitende Schicht kann auch strukturiert aufgedampft und/oder aufgesputtert werden. Weitere Methoden sind Laminieren, Galvanisieren, Aufspritzen, Eintunken, Einrakeln und/oder Drucken.

Die Strukturierung/Unterbrechung der elektrisch leitenden Schicht erfolgt dabei so, dass zwar die elektrische Leistung unterbrochen wird, die Umverpackung und insbesondere die als Träger dienende Folie jedoch als ganzes noch mechanisch stabil genug sind, d.h. in der Regel wird die leitfähige Schicht oder ein Teil davon strukturiert und der Träger bleibt im wesentlichen erhalten. Noch nicht einmal die elektrisch leitende Fläche muss komplett durchtrennt sein, lediglich die leitende Verbindung innerhalb der Fläche wird bei der Strukturierung unterbrochen.

Die Tiefe des Einschnitts der Struktur ist an die Dicke der elektrisch leitenden Schicht der Umverpackung angepasst. Sie kann die gesamte Dicke der Schicht ausmachen oder nur einen Teil der Dicke, solange gewährleistet, ist, dass durch die Struktur der leitende Kontakt innerhalb der leitenden Fläche unterbrochen ist und/oder der Widerstand innerhalb der leitenden Fläche so hoch ist, dass die durch die leitende Fläche erzeugte Abschirmung den Einsatz von Funketiketten nicht beeinträchtigt.

Die Breite der Struktur ist beliebig, solange sie die leitende Fläche unterbricht. Beispielsweise beträgt die Breite der Struktur wenige typischerweise 10 - 500µm. Die minimale Breite hängt nur vom verwendeten Prozess ab (um eine sichere elektrische Unterbrechung zugewähren).

Durch die Struktur wird beispielsweise nicht nur Material der elektrisch leitenden Schicht entfernt und/oder verdrängt, sondern es kann auch ein anderes, beispielsweise isolierendes Material in die elektrisch leitende Schicht eingearbeitet und/oder eingeprägt werden, so dass die Abschirmung innerhalb der Umverpackung ausreichend verhindert wird. Der Einsatz von zusätzlich eingebrachtem Material kann sich insbesondere bei den Anwendungen als günstig erweisen, bei denen der Frischhalteeffekt der Umverpackung insbesondere auch auf die Barriereeigenschaften der Umverpackung gegenüber Luft (Sauerstoff und/oder Feuchte) im Vordergrund steht.

Die Umverpackung kann, aber muss nicht optisch durch die Struktur geprägt sein, außerdem kann sie noch beliebige andere Schichten umfassen, sowohl für optische als auch für funktionelle Zwecke, wobei graphische Gestaltungen der Umverpackung durch die Struktur erzeugt oder von der Struktur unterstützt werden können oder auch durch die Struktur ungestört auf der Umverpackung angebracht sind.

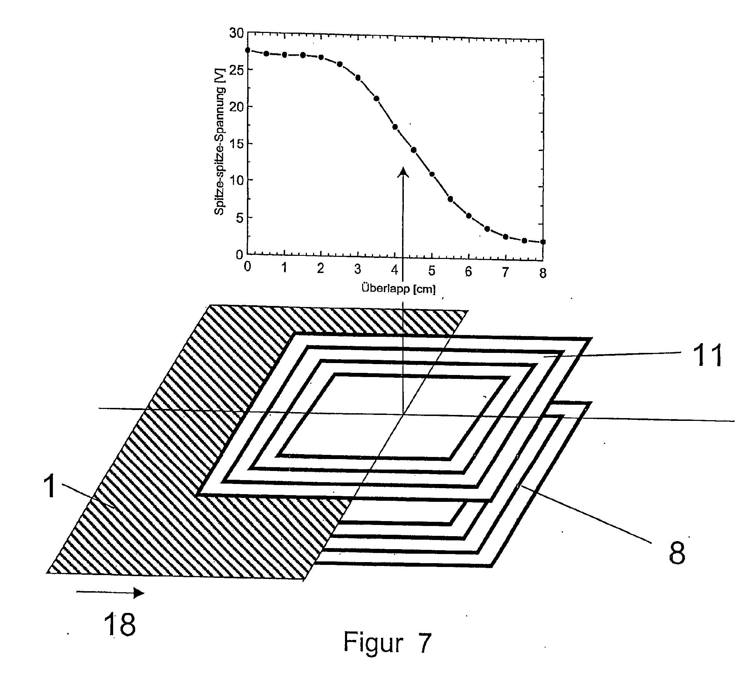

Die Größe der übrig bleibenden durchgehend leitenden Flächen ist von der verwendeten Frequenz und der Größe der verwendeten Antennen abhängig. Dabei gilt bei Verwendung von induktiver Kopplung, dass die Größe der verwendeten Antennen entscheidend ist und bei Verwendung von elektromagnetischen Wellen die Frequenz entscheidend ist. Als praktisch hat sich herausgestellt, dass für eine allgemeine Verhinderung der Abschirmung gilt: je kleiner die einzelnen Flächen desto besser. Als bevorzugt maximale Größe der noch verbliebenen leitfähigen Fläche der elektrisch leitenden Schicht für induktive Kopplung wird etwa die halbe Fläche der Sendeantenne genommen, bei größeren Flächen nimmt der Grad der Abschirmung "rapide" zu, wie man an Figur 7 anhand einer realen Messung erkennen kann.

Die so strukturierten Flächen können eine beliebige Form (Bild, Logo und/oder Schriftzug) haben, solange gewährleistet ist, dass insgesamt kein abschirmender Charakter entsteht. Durch die Struktur können verschiedenste optische Effekte erzielt werden, insbesondere kann sie auch Marketing-Zwecken oder Marken-, oder Diebstahl-Schutz oder sonstigen Sicherheitsmerkmalen dienen. Alternativ oder ergänzend dazu kann die Struktur auch andere technisch funktionelle elektrische Effekte erfüllen, beispielsweise können Antennen für RFID tags durch die Struktur hergestellt werden.

Dabei bildet nach einer vorteilhaften Ausgestaltung die Struktur und/oder ein Teil davon ein elektrisches Bauteil, wenn sie z.B. die Form einer Antenne (z.B. Spulenform oder eine unterbrochene Stabform) für RFID-Tags und/oder sonstige Funketiketten hat. Hier befindet sich der Tag beispielsweise auch direkt auf dem Teil der Umverpackung mit der Struktur.

Es lassen sich natürlich auch andere elektrische Bauteile durch die Struktur realisieren, wie z.B. Kondensatoren. Hierzu braucht man allerdings auf beiden Seiten des Trägers der Umverpackung leitfähige Schichten. Ebenso lassen sich auch Widerstandsbahnen durch eine geeignete Form der Leiterbahnen realisieren.

Beispielsweise wird von der gesamten Umverpackung ein Teil (in der Regel der größte Teil) mit entsprechend diskutierten Methoden strukturiert und verändert, so dass er elektromagnetische Strahlung nicht mehr abschirmt und/oder reflektiert, und mindestens ein anderer Teil der Umverpackung so strukturiert und verändert, dass diese Struktur z.B. als Antenne für ein RFID -Tag oder Funketikett oder für sonstige Zwecke eingesetzt werden kann.

Die typischerweise eingesetzten Umverpackungen für Lebensmittel, Zigaretten, Tabakwaren allgemein, Kaugummi, Schokoladen, Butter, Margarine, Käse etc. umfassen Papier oder einen sonstigen Träger, beispielsweise auch eine Polymerfolie (PET, PES, PEN, Polyimid etc.) als Trägermaterial mit darauf auflaminierter elektrisch leitender Schicht. Die möglichen Materialien zur Ausbildung der elektrisch leitenden Schicht umfassen alle Metalle, (z. B. Aluminium, Kupfer, Silber, Gold, Chrom, Titan, Zinn, Zink, Eisen, etc. sowie beliebige Legierungen), leitfähige Pasten (z.B. Leitsilber, CarbonBlack (das sind mit Graphit/Ruß gefüllte Pasten), leitfähige organisch basierte Materialien (z.B. Polyanilin, Pedot/Pss, oder ähnliche) oder metallorganische Systeme (z.B. Tinten mit gelösten metallischen Verbindungen) oder Kombinationen davon.

Die Dicke des Trägers variiert und beträgt bei Papier typischerweise 20 - 100 g/m^2, üblich sind z.B. 30-50 g/m². Bei Polymerfolien können beliebige Dicken verwendet werden, je nach Art der Umverpackung, typisch sind z.B. 10 - 50 µm (z.B. PET, PPS, oder ähnliche Materialien). Die Dicke der leitfähigen auflaminierten Schicht beispielsweise 3 bis 50 µm, bevorzugt 5-15µm (z.B. bei Aluminum-laminiertem Papier für Zigarettenverpackungen). Bei den anderen genannten Materialien oder Methoden kann das natürlich alles variieren. Es können natürlich auch weitere Schichten zu den genannten aufgebracht werden, z. B. ein Schutzlack gegen Verkratzen oder als Versiegelung, sowie natürlich Farbschichten zum optischen Verdrucken aber auch weitere Schichten für sonstige Zwecke.

Als elektrisches Bauteil stehen hier vor allem die Funketiketten im Vordergrund. Beispiele dafür sind RFID-Tags, insbesondere EPC (electronic product code)-Etiketten und/oder EAS (electronic article surveillance)-Tags. Diese Etiketten basieren auf national oder international freigegebenen Frequenzbändern zur Signalübertragung, typischerweise sind dies: 125-135 kHz, 13,56 MHz, 860-950 MHz oder 2,45 GHz. Teilweise können auch andere Frequenzbänder genutzt werden wie z.B. ca. 6-8 MHz für Diebstahlschutz-Tags.

Weitere Einsatzgebiete können natürlich auch realisiert werden, z.B. Einsatz von Fernsteuerungen (typischerweise im Bereich von ca. 20 - 60 MHz), Mobilfunk (850 - 2000 MHz), sowie Radio (LW, KW, UKW oder vergleichbar) oder Satellitenfunk. Auch kann man Umverpackung so gestalten, dass sie im Mikrowellenofen (z.B. zum Erwärmen von Speisen) nicht entfernt werden muss.

Die Strukturierung kann auch so gestaltet werden, dass bestimmte Frequenzbereiche und/oder Polarisationsrichtungen durchgelassen werden und andere abgeschirmt oder reflektiert werden, z.B. durch die Größe und die Form der leitfähigen Flächen.

Das elektrische Bauteil kann auch zumindest eine Funktionsschicht aus organisch basiertem Material umfassen und/oder generell der Polymerelektronik oder der organischen Elektronik zugeordnet sein.

Die strukturierte Umverpackung kann dann wieder in den herkömmlichen Verpackungsprozess eingespeist werden.

Im Folgenden wird die Erfindung noch anhand von Ausführungsbeispielen näher erläutert:

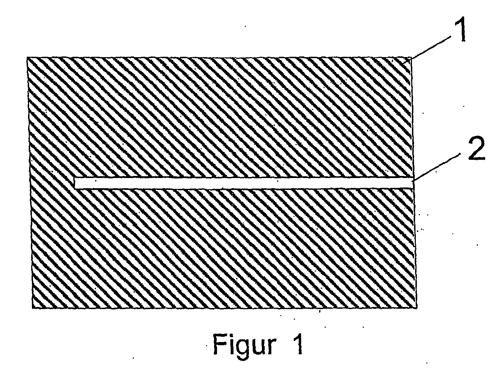

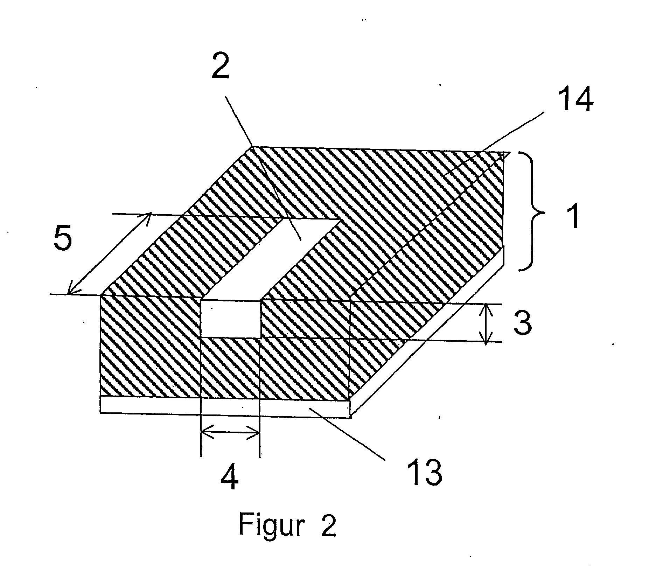

Die Figuren 1 und 2 zeigen gemäβ dem Stand den Technik eine leitende Fläche, bei den durch eine Struktur die elektrisch Leitende Verbindung innerharb den Fläche unterbrochen ist.
Die Figuren 3 und 4 zeigen strukturierte elektrisch leitende Flächen, wobei die Lage einer Spule eines elektrischen Bauteils im Verhältnis zu der Lage der Struktur gezeigt ist.
Figur 5 zeigt ein Beispiel für eine Struktur und
Figur 6 schließlich zeigt eine Umverpackung mit eingezeichneter Lage der inneren Spule und außen eine korrespondierende Spule, die mit der innen gezeigten Spule korrespondiert.
Figur 7 zeigt eine reale Messung der Abschirmwirkung einer leitfähigen Schicht, die zwischen einem Sender und einer Empfängerantenne geschoben wird.

Die Lage der Struktur 2 und deren Dimensionen sind erkenntlich. Die Breite der Struktur 2 ist frei wählbar, solange die elektrische Leitfähigkeit durch die Breite dieser Struktur 2 unterbrochen wird. Gleiches gilt für die Tiefe der Struktur 2 (Die Tiefe kann auch die komplette leitfähige Schicht umfassen, aus Sicherheitsgründen sogar noch bis ins Trägermaterial hinein). Lediglich die Länge 5 der Struktur 2 steht im Zusammenhang mit der Spule des elektrischen Bauteils und/oder des Funketiketts, derart, dass sie zumindest die Hälfte der Spule misst.

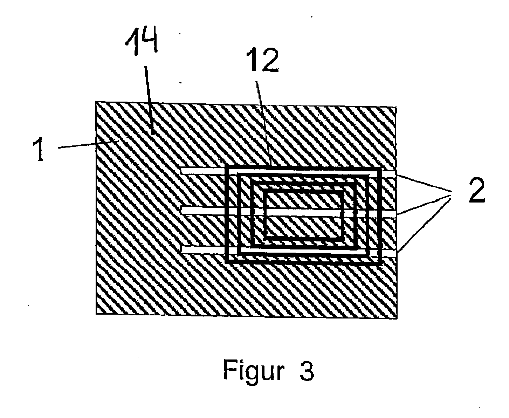

In Figur 3 ist die Umverpackung 1 mit einer Struktur 2 auf der leitenden Schicht (14) zu sehen, die nicht die ganze Länge der elektrisch leitenden Fläche bedeckt, jedoch die gesamte Länge der Antenne 12 (als Antenne ist hier nur beispielhaft und schematisch eine Spule zur induktiven Kopplung gezeigt). Die Form der Antenne kann ganz unterschiedlich sein, je nach Einsatzgebiet; z.B. in Form eines Dipols.

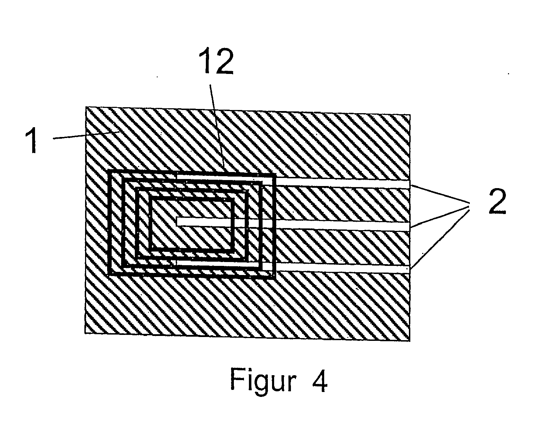

In Figur 4 ist ein ähnlicher Aufbau wie in Figur 3 gezeigt mit dem Unterschied, dass hier die Struktur 2 nur bis zumindest die Hälfte der Ausdehnung der Spule 12 reicht. In beiden Fällen wird die Abschirmung durch die elektrisch leitende Schicht der Umverpackung in so einem Maße verhindert, dass der Einsatz von Funketiketten sinnvoll, also die Funktionsfähigkeit des Bauteils noch gegeben ist.

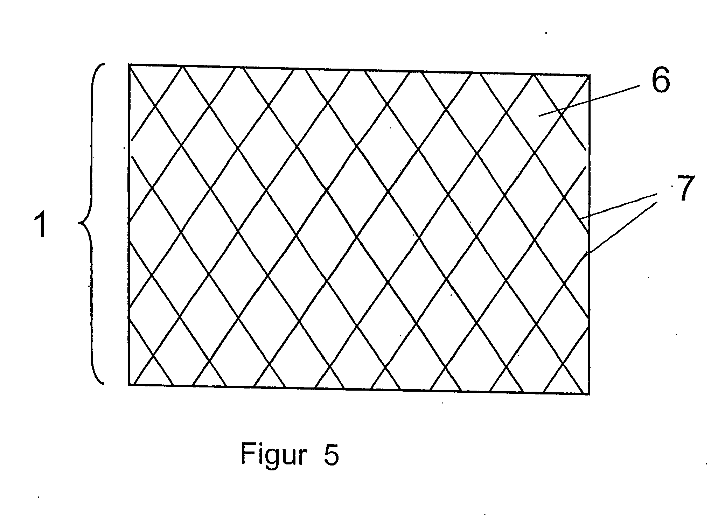

In Figur 5 ist ein Beispiel für eine Struktur gezeigt, die großflächig auf der elektrisch leitenden Schicht der Umverpackung 1 aufbringbar ist. Man erkennt eine rautenförmige Struktur mit vielen parallelen und vielen im Winkel zueinander stehenden Einschnitten 7, bei der die elektrisch leitende Fläche 6 der elektrisch leitenden Schicht der Umverpackung 1 in viele kleine Flächen unterteilt ist. Eine Abschirmung, die den Einsatz von Funketiketten empfindlich stören würde, wird so wirkungsvoll verhindert, weil kleine leitende Flächen keine Störungen in der Funkverbindung zwischen Funketikett und Auslesegerät bewirken. Insbesondere, wenn die Lage der Spule innerhalb der Umverpackung nicht klar ist, ist es sinnvoll eine großflächige Struktur, wie hier gezeigt, aufzubringen, weil die effektivste Verhinderung der Abschirmung durch einen Einschnitt in der elektrisch leitenden Fläche gegenüber der Spule des elektrischen Bauteils erreicht wird, die bei der großflächigen Aufbringung automatisch immer mit umfasst ist.

In Figur 6 ist die abschirmende Fläche (d.h. die Umverpackung) in Form einer Schachtel 10 dargestellt. Eine äußere Sendeantenne 8 steht gegenüber der in der Schachtel befindlichen Empfängerantenne 11. Nach dem Stand der Technik wird die elektromagnetische Strahlung zwischen Sendeantenne 8 und Empfängerantenne 11 durch die sich dazwischen befindliche Schachtel, in oder an der sich eine leitende Fläche befindet, abgeschirmt, so dass keine Funkverbindung zu Stande kommt. Durch die Struktur 9 gemäß der Erfindung wird jedoch die leitende Fläche 14 unterbrochen und deshalb kann ein Funkkontakt zwischen Sender 8 und Empfänger 11 aufgebaut werden. Das gleiche gilt natürlich auch, wenn sich die Empfängerantenne 11 nicht "innerhalb" der Schachtel befindet, sonder an und außerhalb der Umverpackung aber in deren Umgebung.

Die gezeigte Struktur 9 ist nur ein Beispiel und nach der Erfindung kann die Struktur natürlich alle möglichen Formen gemäβ den Ansprüchen haben, z.B. auch die Form aus Figur 5.

In Figur 7 ist eine Messung der Abschirmwirkung einer leitfähigen Schicht gezeigt. Zwischen Sendeantenne 8 und Empfangsantenne 11 wird von links nach rechts in Pfeilrichtung 18 eine leitfähige Schicht, nämlich die Umverpackungsschicht 1 geschoben. In der oberen Graphik ist nun die an 11 gemessene induzierte Spannung in Abhängigkeit vom Überlapp der leitfähigen Schicht 1 gezeigt. Man erkennt deutlich, dass bis etwa 1/3 Überlapp die induzierte Spannung konstant bleibt, also keine Abschirmungswirkung vorhanden ist. Bei größerem Überlapp, findet dann ein rapider Abfall der induzierten Spannung statt, es findet also eine starke Abschirmwirkung statt. Bei komplettem Überlapp ist nahezu keine induzierte Spannung mehr messbar (im wesentlichen Rauschen), was auf eine weitgehend komplette Abschirmwirkung hinweist. Ein ähnliches Verhalten erhält man auch, wenn Sender- und Empfängerantenne sich an einer Seite der leitfähigen Folie befinden und die leitfähige Folie sehr nahe an einer der Antennen geführt wird.

Durch die hier erstmals offenbarte Möglichkeit der Verminderung der Abschirmung durch elektrisch leitfähige Umverpackungen ist es möglich, mit sehr einfachen Mitteln und durch minimale Eingriffe die unerwünschte Abschirmwirkung leitender Flächen auf magnetische und elektromagnetische Felder deutlich zu vermindern. Damit ist es möglich, z.B. Funketiketten, innerhalb oder in der Umgebung von metallisierten Verpackungen unterzubringen, ohne dass deren Funktionstüchtigkeit beeinträchtigt wird.

Die bereits publik gemachte Absicht vieler Firmen, in Zukunft RFID-Funketiketten auf eine Vielzahl von Produkten anzubringen wird hier auch für Produkte ermöglicht, die in metallenen Folien, metallisiertem und/oder mit Metall laminiertem Papier oder Folie und/oder Verbundmaterialien, die metallene Schichten enthalten, eingepackt sind.

## Patentansprüche

1. Produkt, das ein elektrisches Bauteil (11) mit Spule (12) hat, wobei das elektrische Bauteil (11) mit Spule (12) auf oder in dem Produkt angeordnet ist und das Produkt eine Umverpackung (1) hat, die einen Träger (13) und eine elektrisch leitende Schicht (14) aufweist, wobei der Träger Papier oder eine Polymerfolie umfasst und die elektrisch leitende Schicht (14) eine Struktur (2,7) hat, die die durch die elektrisch leitende Schicht (14) der Umverpackung (1) erzeugte elektromagnetische Abschirmung des elektrischen Bauteils (11) mit Spule (12) auf oder in dem Produkt so vermindert, dass die Funktionsfähigkeit des elektrischen Bauteils (11) auf oder in dem Produkt erhalten bleibt, wobei das elektrische Bauteil (11) Informationen durch die Umverpackung (1) durch nach außen liefert oder erhält und/oder dessen Energieversorgung durch die Umverpackung (1) hindurch gespeist wird, wobei das Produkt dadurch gekennezeichnet ist, dass die Umverpackung (1) um das Produkt mit elektrischem Bauteil (11) so angeordnet ist, dass die Struktur (2,7) der Umverpackung, (1), deren elektrisch leitende Schicht (14) zumindest über der Spule (12) des elektrischen Bauteils (11) auf oder in dem Produkt mehrmals unterbricht, so dass die übrig bleibenden leitfähigen Bereiche der eleltrische leitenden Schicht (14) so gestaltet sind, dass Wirbelströme vermindert werden.

2. Produkt nach Anspruch 1, wobei die elektrisch leitende Schicht (14) der Umverpackung (1) des Produktes zusätzlich zur Struktur (2,7) eine Beschichtung zur Verminderung der Abschirmung hat

3. Produkt nach einem der Ansprüche 1 oder 2, wobei die Struktur (2) ein einfacher Einschnitt in die leitende Fläche der elektrisch leitenden Schicht (14) ist.

4. Produkt nach einem der vorstehenden Ansprüche, wobei die Struktur (2) der Umverpackung (1) in Form zumindest zweier paralleler und/oder zumindest zweier im Winkel zueinander stehender Einschnitte (7) aufgebracht ist.

5. Produkt nach einem der vorstehenden Ansprüche 2 bis 4, wobei die Beschichtung zur Verminderung der Abschirmung eine maximal 1 µm dicke Metallschicht mit weiteren Schichten zur Vervollständigung der Umverpackung (1) umfasst.

6. Produkt nach einem der vorstehenden Ansprüche, wobei die Struktur (2) der Umverpackung (1) oder Teile der Struktur (2) elektrische Bauteile, wie eine Antenne, einen Kondensator, eine Leiterbahn, eine Diode oder Teile davon bilden.

7. Produkt nach einem der vorstehenden Ansprüche, wobei die Struktur (2) der Umverpackung (1) zumindest neben ihrem technischen Effekt auch einen optischen Effekt, wie ein Bild, ein Sicherheitsmerkmal, einen Schriftzug, ein sonstiges optisches Merkmal und/oder ein Logo zeigt.

8. Produkt nach einem der vorstehenden Ansprüche, wobei die Struktur (2) der Umverpackung (1) gegenüber der Mitte der Spule (12) des elektrischen Bauteils (11) angeordnet ist.

9. Produkt nach einem der vorstehenden Ansprüche, wobei die Oberfläche der Umverpackung (1) ein Bild zeigt.

10. Produkt nach einem der vorstehenden Ansprüche, wobei der Träger der Umverpackung (1) eine Dicke von kleiner/gleich 50µm hat.

11. Produkt nach einem der vorstehenden Ansprüche, wobei die elektrisch leitfähige Schicht (14) eine Dicke von kleiner/gleich 50µm hat.

12. Produkt nach einem der vorstehenden Ansprüche, wobei die Breite der Struktur (2,7) der Umverpackung (1) bis zu 500 µm beträgt.

13. Produkt nach einem der vorstehenden Ansprüche, wobei sich die Struktur (2,7) der Umverpackung (1) über mehr als die Hälfte der Umverpackung (1) erstreckt.

14. Produkt nach einem der vorstehenden Ansprüche, das zusätzlich zu dem elektrischen Bauteil mit Spule noch Zigaretten, Lebensmittel, Mobilfunkvorrichtung, Arzneimittel, Radio, Fernbedienung und/oder eine Mikrowelle umfasst.

15. Verfahren zur Verpackung eines Produktes mit elektrischem Bauteil und Spule nach einem der Ansprüche 1 bis 14, wobei in einem ersten Verfahrensschritt eine Umverpackung mittels einer Methode zur strukturierten Aufbringung einer Schicht auf einen Träger oder einer Beschichtungsmethode eines Trägers mit nachfolgender Strukturierung eine Umverpackung hergestellt wird und in einem zweiten Verfahrensschritt diese Umverpackung um das Produkt so gelegt wird, dass die Struktur der Umverpackung deren elektrisch leitende Schicht zumindest über einer Spule des elektrischen Bauteils auf oder in dem Produkt in zumindest zwei Flächen unterteilt.

16. Verfahren zur Verpackung eines Produktes nach Anspruch 15, wobei zur Herstellung der Umverpackung ein dry phase patterning einer metallisierten Schicht eingesetzt wird.

## Claims

1. Product comprising an electric component (11) with a coil (12), the electric component (11) with a coil (12) being arranged on or in the product, and the product having an external package (1) which comprises a support (13) and an electrically conductive layer (14), the support comprising paper or a polymer film and the electrically conductive layer (14) having a structure (2, 7) which reduces the electromagnetic shielding, generated by the electrically conductive layer (14) of the external package (1), of the electric component (11) with a coil (12) on or in the product, in such a way that the electric component (11) on or in the product remains operable, the electric component (11) supplying or receiving information externally through the external package (1) and/or the energy supply thereof being fed through the external package (1), the product being **characterised in that** the external package (1) is arranged around the product comprising the electric component (11) in such a way that the structure (2, 7) of the external package (1) interrupts the electrically conductive layer (14) thereof a number of times, at least above the coil (12) of the electric component (11) on or in the product, so that the remaining conductive areas of the electrically conductive layer (14) are formed in such a way that eddy currents are avoided.

2. Product according to claim 1, wherein, in addition to the structure (2, 7), the electrically conductive layer (14) of the external package (1) of the product also has a coating for preventing shielding.

3. Product according to one of claims 1 or 2, wherein the structure (2) is a simple recess in the conductive area of the electrically conductive layer (14).

4. Product according to one of the preceding claims, wherein the structure (2) of the external package (1) is applied in the form of at least two parallel recesses (7) and/or at least two recesses (7) arranged at an angle to one another.

5. Product according to one of preceding claims 2 to 4, wherein the coating for reducing shielding comprises a metal layer with a maximum thickness of 1 µm with further layers for completing the external package (1).

6. Product according to one of the preceding claims, wherein the structure (2) of the external package (1) or parts of the structure (2) form electric components, such as an antenna, a capacitor, a conductor track, a diode, or parts thereof.

7. Product according to one of the preceding claims, wherein the structure (2) of the external package (1) at least exhibits not only its technical effect, but also a visual effect, such as an image, a security feature, a lettering, another visual feature and/or a logo.

8. Product according to one of the preceding claims, wherein the structure (2) of the external package (1) is arranged opposite the centre of the coil (12) of the electric component (11).

9. Product according to one of the preceding claims, wherein the surface of the external package (1) shows an image.

10. Product according to one of the preceding claims, wherein the support of the external package (1) has a thickness less than/equal to 50 µm.

11. Product according to one of the preceding claims, wherein the electrically conductive layer (14) has a thickness less than/equal to 50 µm.

12. Product according to one of the preceding claims, wherein the width of the structure (2, 7) of the external package (1) is up to 500 µm.

13. Product according to one of the preceding claims, wherein the structure (2, 7) of the external package (1) extends over more than half of the external package (1).

14. Product according to one of the preceding claims, said product, in addition to the electric component with a coil, also comprising cigarettes, a foodstuff, a mobile radio device, a medicinal product, a radio, a remote control and/or a microwave.

15. Method for packaging a product comprising an electric component and a coil according to one of claims 1 to 14, wherein, in a first method step, an external package is produced by means of a method for the structured application of a layer onto a support or by means of a method for coating a support with subsequent structuring of an external package and, in a second method step, this external package is placed around the product in such a way that the structure of the external package divides the electrically conductive layer thereof into at least two areas above a coil of the electric component on or in the product.

16. Method for packaging a product according to claim 15, wherein dry phase patterning of a metallised layer is used to produce the external package.

## Revendications

1. Produit, qui présente un élément (11) électrique doté d'une bobine (12), sachant que l'élément (11) électrique doté d'une bobine (12) est disposé sur ou dans le produit et que le produit comprend un emballage (1) doté d'un support (13) et d'une couche (14) électroconductrice, sachant que le support comporte du papier ou un film polymère et que la couche (14) électroconductrice (14) présente une structure (2, 7), qui réduit la protection électromagnétique, générée par la couche (14) électroconductrice de l'emballage (1), de l'élément (11) électrique (11) doté d'une bobine (12) sur ou dans le produit de telle sorte que l'aptitude fonctionnelle de l'élément (11) électrique reste intacte sur ou dans le produit, sachant que l'élément (11) électrique fournit vers l'extérieur ou reçoit des informations à travers l'emballage (1) et/ou que l'apport en énergie de l'élément électrique est amené à travers l'emballage (1), sachant que le produit est **caractérisé en ce que** l'emballage (1) est disposé avec l'élément (11) électrique autour du produit de telle manière que la structure (2, 7) de l'emballage (1) interrompt à plusieurs reprises la couche (14) électroconductrice de cette dernière au moins par l'intermédiaire de la bobine (12) de l'élément (11) électrique sur ou dans le produit de sorte que les zones restantes conductrices de la couche (14) électroconductrice sont configurées de telle manière que des courants parasites sont évités.

2. Produit selon la revendication 1, sachant que la couche (14) électroconductrice de l'emballage (1) du produit en plus de la structure (2, 7) présente un revêtement servant à réduire la protection.

3. Produit selon l'une quelconque des revendications 1 ou 2, sachant que la structure (2) est une simple entaille dans la face conductrice de la couche (14) électroconductrice.

4. Produit selon l'une quelconque des revendications précédentes, sachant que la structure (2) de l'emballage (1) est appliquée sous la forme au moins de deux entailles (7) parallèles et/ou de deux entailles situées selon un angle l'une par rapport à l'autre.

5. Produit selon l'une quelconque des revendications précédentes 2 à 4, sachant que le revêtement servant à diminuer la protection comporte une couche de métal épaisse de maximum 1 µm et dotée de couches supplémentaires servant à finaliser l'emballage (1).

6. Produit selon l'une quelconque des revendications précédentes, sachant que la structure (2) de l'emballage (1) ou des parties de la structure (2) forment des éléments électriques tels qu'une antenne, un condensateur, une piste conductive, une diode ou des parties de ceux-ci.

7. Produit selon l'une quelconque des revendications précédentes, sachant que la structure (2) de l'emballage (1) montre au moins outre son effet technique, également un effet optique, tel qu'une image, une caractéristique de sécurité, un écrit, une autre caractéristique optique et/ou un logo.

8. Produit selon l'une quelconque des revendications précédentes, sachant que la structure (2) de l'emballage (1) est disposée par rapport au centre de la bobine (12) de l'élément (11) électrique.

9. Produit selon l'une quelconque des revendications précédentes, sachant que la surface de l'emballage (1) montre une image.

10. Produit selon l'une quelconque des revendications précédentes, sachant que le support de l'emballage (1) présente une épaisseur inférieure ou égale à 50 µm.

11. Produit selon l'une quelconque des revendications précédentes, sachant que la couche (14) électroconductrice présente une épaisseur inférieure ou égale à 50 µm.

12. Produit selon l'une quelconque des revendications précédentes, sachant que la largeur de la structure (2, 7) de l'emballage (1) peut aller jusqu'à 500 µm.

13. Produit selon l'une quelconque des revendications précédentes, sachant que la structure (2, 7) de l'emballage (1) s'étend sur plus de la moitié de l'emballage (1).

14. Produit selon l'une quelconque des revendications précédentes, qui comporte en plus de l'élément électrique doté d'une bobine, des cigarettes, des produits alimentaires, un dispositif de radiocommunication, des médicaments, une radio, une commande à distance et/ou un micro-ondes.

15. Procédé servant à emballer un produit doté d'un élément électrique et d'une bobine selon l'une quelconque des revendications 1 à 14, sachant que lors d'une première étape de procédé, un emballage est fabriqué au moyen d'une méthode servant à appliquer de manière structurée une couche sur un support ou au moyen d'une méthode de revêtement d'un support présentant une structuration qui suit, et que lors de la deuxième étape de procédé, ledit emballage est posé autour du produit de telle manière que la structure de l'emballage subdivise en au moins deux surfaces, la couche électroconductrice de cette dernière par l'intermédiaire d'une bobine de l'élément électrique sur ou dans le produit.

16. Produit servant à emballer un produit selon la revendication 15, sachant qu'un façonnage en phase sèche d'une couche métallisée est utilisé pour la fabrication de l'emballage.
